Europäisches Patentamt

European Patent Office

Office européen des brevets

(11) Publication number: **0 310 197**
**A1**

## EUROPEAN PATENT APPLICATION

(21) Application number: **88202143.9**

(22) Date of filing: **30.09.88**

(51) Int. Cl.4: **F16L 1/02 , F16L 51/00**

(30) Priority: **30.09.87 DK 5129/87**

(43) Date of publication of application:
**05.04.89 Bulletin 89/14**

(84) Designated Contracting States:
**AT BE CH DE ES FR GB GR IT LI NL SE**

(71) Applicant: **i.c. Möller a/s**
**Treldevej 191**
**DK-7000 Fredericia(DK)**

(72) Inventor: **Pedersen, Hans Nörgaard**
**Krogen 4, Haldrup**
**DK-8700 Horsens(DK)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) **A method of laying district heating pipe lengths in the ground and a pipe element for use herewith.**

(57) In subterranean district heating pipe systems the problem occurs that the end portions of long, straight pipe stretches (2) expand and contract by temperature changes of the conductor pipe (16) of the heat insulated pipe, this giving rise to corresponding lateral displacements of the end portions of the transverse pipe elements (5, 6) as joined with the ends of the long pipe stretches (2). Such displacements are in no way desirable, and they can be counteracted by expensive ground anchorings. According to the invention they are not eliminated, but reduced to an acceptable level in a simple and cheap manner, viz. by using for the said end portions such pipe elements (3), the outer surface of which is provided with a coarse pattern of marked depressions (10, 20), which serve to increase the friction between the pipe and the surrounding infill material (18) when the latter is of a high internal shear strength. Hereby the said displacements are reduced considerably.

FIG. 1

## A method of laying district heating pipe lengths in the ground and a pipe element for use herewith.

The present invention relates to a method of laying district heating pipe systems in the ground.

It is an elementary condition that a district heating pipe length should be able to expand and contract axially by occurring temperature variations, not least by the change between the mounting temperature and the normal operational temperature. Long stretches may be subdivided in sections which are mutually connected through an axial compensator and are normally anchored to the ground midways of each section. For minimizing the number of compensators and anchorings the sections should be as long as possible, but their length will be limited by the condition that the frictional forces acting between the ground and the pipe surface shall be smaller than the axial resistivity of the steel pipes. For this reason the pipe surface should be as smooth as possible, as this will condition a large length of the sections. Normally the pipes consist of an inner steel pipe surrounded by a mantle pipe of plastic with an intermediate layer of an insulation material, but this material forms a rigid connection between the steel pipe and the mantle pipe, such that the smooth pipe surface should be that of the mantle pipe.

However, it is also known that long pipe stretches can be laid in the ground without the use of anchorings and compensators. Even when the outer pipe surface is smooth the earth friction may hold or fix the pipe against axial displacements, and instead changes of the stress conditions in the pipe will occur. At places where such a pipe length continues through a bending upwardly or into a transverse pipe length there will be missing the relevant friction locking of a continued straight pipe length, and it is desirable, therefore, that a ground anchoring, normally a large concrete block, be arranged adjacent the end of the straight pipe. However, it is a usable alternative to allow the non-anchored end portion of the pipe length to perform longitudinal displacements by varying temperatures, whereby it is only necessary to arrange the associated uplead or transverse pipe portion in such a manner that the same can be moved the relevant distance crosswise of its own length direction. e.g. by placing a layer of foam material at at least one side of the transverse leg of a bend and the end portion of the following or preceding pipe length as connected therewith. An axial displacement of the first mentioned end portion will then result in a bending of the end portion of the associated transverse pipe, and such a bending will be allowed by the said resilient foam material as placed against the portion to be bent.

The part of the pipe length which is fixed by the earth friction is designated as friction fixed, while the end portions thereof, which cannot be friction fixed, are designated as friction restrained stretches.

It is highly desirable to keep the expansion and contraction displacements of the friction restrained stretches as small as possible, as the associated transverse, bendable pipe portions may then be designed and mounted in a simplified manner. It is already known to counteract the said expansion e.g. by a mechanically or thermally produced prestretching of the relevant part of the pipe length, but generally these known techniques are expensive to use.

In connection with the invention it has been realized that a corresponding result is achievable in a largely simplified manner by way of an increased friction between the end length portions of the pipe length and the surrounding ground material. It has been found that it is possible to increase this surface friction highly beyond or above that of a pipe surface which is not provided as particularly smooth, viz. by preparing the surface so as to be indeed particularly rough.

The desired pronounced roughness of the outer pipe surface, i.e. of the surface of the mantle pipe, is achievable by producing or even working the mantle pipe such that it shows pronounced depressions or outstanding collar portions. The depressions, which may appear as pits or transverse grooves, should be deep and wide enough to accommodate some small part of the infill material, also if only a few particles thereof, such that the pipe surface is locally 'anchored' to the loose infill material: this of course, is no rigid anchoring, but it will involve that the displacement friction or the shear stress will no longer or at least to a reduced degree - be established between the pipe surface and the infill, but rather internally in the infill material. The pipe will move or seek to move portions of the infill in a direct manner, but hereby the plane of separation between moved and non-moved portions will not be the pipe surface itself, but rather a tubular plane located slightly outside the pipe surface. inside the infill material. Thus, the friction will be determined not by the infill/pipe-coefficient, but rather by the infill/infill-coefficient, i.e. mainly be the shear strength of the infill.

Hereby it is possible to obtain an increased friction anchoring of the said friction restrained lengths by selecting an infill material having a high shear strength, and it is a resulting effect that the said bending out of associated transverse pipe portions can be at least largely reduced, which will imply an important simplification of the installation.

As well known to the relevant experts there are in fact, various infill materials available having a relatively high shear strength, primarily so-called glacial sand or hill sand, which is an original, terrestric sand material, the grains of which have sharp corners, unlike seasand with rounded corners, which do not result in any high shear strength of the material. It has been found that already with the use of such a common infill material as the said glacial sand or corresponding gravel materials, combined with the pronounced rough surface of the pipes, will produce a considerably increased anchoring effect on the said friction restrained pipe portions.

On this background the method according to the invention is characterized by the steps specified in the characterizing clause of claim 1.

The invention also comprises the pipe elements as provided with the particularly rough surface as here referred to.

In the following the invention is described in more detail with reference to the drawing , in which,

Fig. 1 is a schematic view of a subterranean pipeline,

Fig. 2 is a longitudinal sectional view of a pipe portion thereof,

Fig. 3 is a plan view of different roughness configurations of a pipe surface.

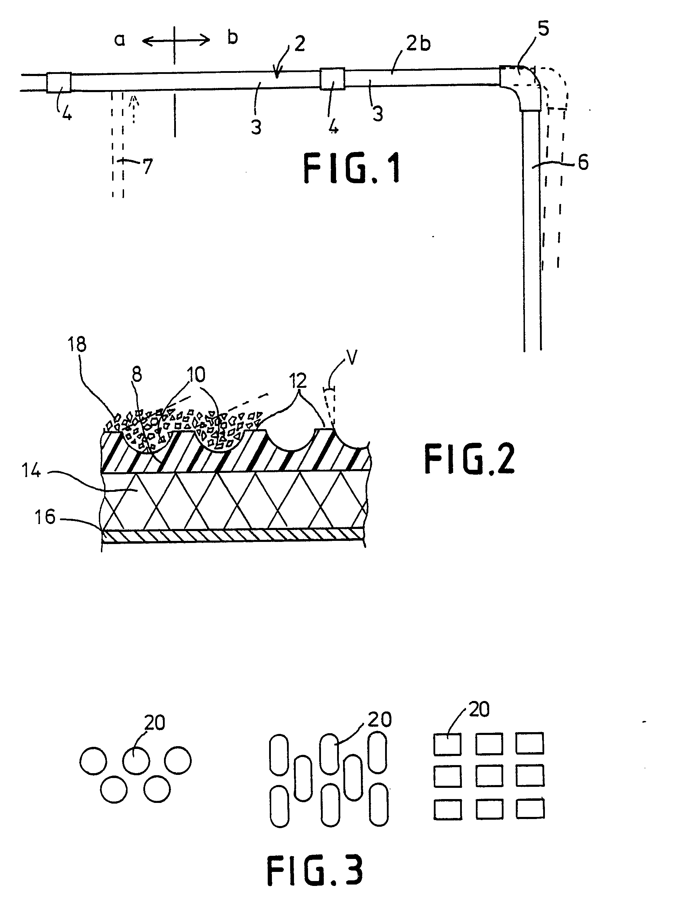

In Fig. 1 is shown a straight pipe length 2 continuing through a bend 5 in a transversely oriented pipe length 6, the pipe being a heat insulated district heating pipe having an outer plastic mantle pipe surrounding an inner conductor pipe of steel with an intermediate layer of an insulation material in a so-called rigid system, i.e. with a stiff binding between the mantle pipe and the conductor pipe through the insulation material as preferably consisting of polyurethane foam. The pipe is laid in a trench (not shown), which is filled with glacial sand or gravel or a similar infill material substantially surrounding the pipe 2. The pipe 2 is made of consecutive prefabricated pipe elements 3, which are joined as shown by joints 4.

To the left of arrow a shown in Fig. 1 the pipe length 2 is laid in a conventional manner, with the use of pipe elements 3 having a smooth outer surface, such that a long pipe length leftwards of the arrow a will be anchored in the ground against axial displacements caused by current temperature variations of the pipe 2. Thus, leftwards of the arrow a the pipe 2 will be 'friction fixed' in the ground.

Towards the right of arrow b the pipeline 2 is laid in just the same manner, but since the pipeline is axially interrupted at the bend 5 it will miss the frictional anchoring as would be provided by a prolongation of the pipeline 2 beyond the bend 5, and consequently the end portion 2(b) will only be 'friction restrained'. Thus, the pipe end adjacent the bend 5 will carry out longitudinal movements in response to temperature changes of the inner conductor pipe, whereby the bend 4 and the associated end portion of the transverse pipe 6 will be displaced as indicated in dotted lines. In conventional systems these displacements give rise to considerable problems.

Such displacements can be avoided by means of an ordinary ground anchoring of the pipe end, but this and other known solutions of the problem tend to be rather expensive.

In accordance with the present invention the pipe along the friction restrained length 2b has an outer mantle pipe 8, Fig. 2, the outside of which is provided with a row of depressions 10, with intermediate outstanding portions 12. The depressions may be annular grooves or a helical groove. In Fig. 2 the said insulation material is designated 14, the conductor steel pipe 16, and the surrounding sand or infill 18.

It is important that the grooves 10 be broad and deep enough to be 'large' compared with the particles of the infill, such that the cross section of the grooves may accommodate at least several infill particles.

When the pipe is displaced axially it will force the immediately surrounding layer of sand 18 to be moved almost correspondingly, as the sand in the grooves will be moved in a compulsory manner along with the pipe. The sand in the grooves or pockets 10 is in frictional engagement with the outside sand, and the effective friction against the displacement, therefore, will occur in the sand itself, e.g. as indicated by dotted shear lines in Fig. 2 for a displacement towards the right, rather than between the sand and the remaining smooth pipe surface, and the resulting friction may hereby be considerably increased.

In Fig. 1 is indicated a narrower branch pipe 7 arranged perpendicular to the pipe 2. As shown by a dotted arrow the branch pipe 7 may seek to displace the pipe 2 laterally by occurring expansion and contraction stresses in the branch pipe, and since this is an undesirable effect it may be highly relevant to at least reduce this effect on the pipe 2 by using for the branch pipe 7 pipe elements according to the invention.

The width or rather the axial length of the depressions 10 should preferably be larger than the corresponding length of the outermost surface portions of the protrusions 12, and the latter should of course be long enough, in view of the strength of the mantle pipe material, to effectively resist the deformation pressure, to which they are exposed as a reaction to the displacement force exerted on the sand. Generally or optimally, therefore, the depression pattern should be adapted to the shear strength of both the mantle pipe and the infill material. Normally the axial length of the depressions 10 may be much larger than the length of the protrusions 12 between them.

Preferably the infill material should be ordinary glacial sand, which is characteristic by parameters as follows:Grain size 0-8 mm
Throughfall on a 0.125 mm mesh sieve 10%
Throughfall on a 0.5 mm mesh sieve 50%
Coefficient of non-uniformity: 2.5

As an example the groove depth may be some 1-2 mm and the width (axial length) some 3 mm. A preferred depth is 1.5 mm, viz. some 2-3 times the average sand particle size, which is about 0.7 mm, and once the depth is sufficient for the anchoring between the pipe and the sand a larger groove depth will not increase the friction noticeably. The axial length of the protrusions 12 should be as small as possible and need not be more than some 1 mm for a conventional mantle pipe material of polyethylene.

The grooves 10 may be produced by subjecting an extruded pipe 8 to cutting or milling e.g. by means of a disc miller, which, generally, may be moved along the rotating pipe so as to produce the grooves as a threading. The removed may be reused.

Though advantageous in connection with all pipe sizes the invention is particularly advantageous for large sizes, because the length and therewith also the expansion of the friction restrained lengths is particularly pronounced for large size pipes: thus, conventionally, the friction restrained length of a 800 mm pipe is some 300 m, which may give rise to an expansion of some 100-150 mm, while the corresponding expansion of a 500 mm pipe is only some 40-60 mm.

The side surfaces of the depressions shall be sloping less than 45° with vertical for ensuring that the sand is not just forced out of the depressions when the pipe moves. The slope angle, shown as v in Fig. 2, may well be almost zero. In practice it is important for obtaining the full effect that the edges between the groove walls and the outer pipe surface are sharp.

With the grooves and the infill material here described it is possible to achieve shear strengths of some 110 grammes per $cm^2$ pipe surface. For comparison a conventional smooth pipe shows a figure of some 45 $g.cm^2$ and a conventional corrugated pipe some 65 $g/cm^2$.

It is well known that the discussed expansion of the pipe is proportional with the length of the friction restrained pipeline portion, and this length is inverted proportional with the shear strength between the sand and the mantle pipe. From the above figures it will be appreciated that with the invention it will be possible to reduce the expansion or displacement to less than the half of its normal value, which is very important i.a. for the lifetime of the bend 6. Another possibility is that for a given expansion the difference between the minimum and the maximum temperature of the conductor pipe can be doubled, as the expansion and contraction is proportional with the temperature difference.

Instead of annular grooves it is possible to use discrete pockets or pits as shown in various shapes and patterns and designated 20 in Fig. 3. Hereby the outer pipe surface will be continuous, this being important at the ends of the pipe elements, where the pipe surface shall act as a sealing surface towards a surrounding connector tube, which is either welded or tightened against the pipe surface for providing an entirely tight connection between opposed pipe element ends. Alternatively, of course, these pipe end areas can be left entirely without depressions 10 or 20 for the same purpose.

In practice the required packing of the infill for its intrusion into the depressions is achievable by an ordinary vibration stamping of the infill, this work normally being done anyway for securing a sufficient carrier ability of the infill.

## Claims

1. A method of establishing a subterranean district heating pipe length, comprising the steps of mounting and joining in a pipe trench a row of prefabricated heat insulated pipe elements to form a substantially straight or only slightly curved pipe length, which is at least at one end continued in a following or preceding pipe length through a relatively sharp bending, and filling the pipe trench with infill material such as sand or gravel to thereby achieve a general friction anchoring of the pipe against axial displacements as potentially caused by variations of the pipe temperature, e.g. between the ambient mounting temperature and the operational temperature of the pipe length, characterized in that at least over a sub length of the pipe length adjacent said one end thereof and preferably along the friction restrained length as herein defined such pipe elements are mounted the exposed surface of which is macrorough relative the general or average particle size of the infill material, i.e. with pits or transversely extending grooves having a size larger than said average particle size, and that the infill material is packed about the said sub length such that it intrudes into the said pits or grooves.

2. A heat insulated pipe element for use in subterranean pipe systems laid by the method according to claim 1, comprising an inner conductor pipe of metal, an outer mantle pipe of plastic and an intermediate layer of a rigid heat insulation material firmly anchoring the connector and mantle pipes mutually, characterized in that the outside of the mantle pipe is provided with marked depressions arranged with mutual spacing in the longitudinal direction of the pipe.

3. A pipe element according to claim 2, in which the depressions as seen in a longitudinal cross section have end walls forming sharp edges with the outer pipe surface.

4. A pipe element according to claim 2, in which the depth of the depressions is 1-5 mm, preferably 1-2 mm.

5. A pipe element according to claim 2, in which the longitudinal spacing between the depressions is 1-10 mm and the length of the depressions 2-20 mm.

6. A pipe element according to claim 2, in which the depressions are arranged as annular grooves or a threading in the outside of the mantle pipe.

FIG.1

FIG.2

FIG.3

| DOCUMENTS CONSIDERED TO BE RELEVANT | | | EP 88202143.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | AT - B - 360 287 (MEIER-SCHENK ARTHUR) <br> * Totality * <br> -- | 1 | F 16 L 1/02 <br> F 16 L 51/00 |
| A | DE - A1 - 3 009 140 (MEIER-SCHENK AG) <br> * Totality * <br> -- | 1 | |
| A | DD - A - 139 748 (BALLKE) <br> * Totality * <br> ---- | 1 | |

TECHNICAL FIELDS SEARCHED (Int. Cl.4)

F 16 L 1/00

F 16 L 9/00

F 16 L 51/00

F 16 L 58/00

The present search report has been drawn up for all claims

| Place of search | Date of completion of the search | Examiner |
|---|---|---|
| VIENNA | 27-12-1988 | SCHUGANICH |